# EUROPÄISCHE PATENTSCHRIFT

(11) **EP 3 456 585 B1**
(45) Veröffentlichungstag und Bekanntmachung des Hinweises auf die Patenterteilung: **18.11.2020**
(21) Anmeldenummer: 18193949.7
(22) Anmeldetag: 12.09.2018
(51) Int. Cl.: B60P 1/64

(54) **ABROLLKIPPER/ABSETZKIPPER MIT AUTOMATISIERTEM BEWEGUNGSABLAUF DES HAKENARMES/DER SCHWENKARME AUF KNOPFDRUCK**
ROLL-OFF/DROP-OFF TIPPER WITH AUTOMATED COURSE OF MOVEMENT OF THE HOOK ARM/THE SWIVEL ARMS AT THE TOUCH OF A BUTTON
BENNE BASCULANTE / AMOVIBLE À DÉROULEMENT DES MOUVEMENTS AUTOMATISÉ DU BRAS À CROCHET / DU BRAS PIVOTANT PAR PRESSION SUR UN BOUTON

(30) Priorität: 14.09.2017 DE 102017216300
(43) Veröffentlichungstag der Anmeldung: 20.03.2019
(73) Patentinhaber: Franz Xaver Meiller Fahrzeug- und Maschinenfabrik - GmbH & Co KG, 80997 München (DE)
(72) Erfinder: DREXLER, Hubert, 82347 Bernried (DE)
(74) Vertreter: Weickmann & Weickmann PartmbB

(56) Entgegenhaltungen:
- EP-A1- 3 141 420
- DE-A1- 10 224 933
- US-A1- 2014 069 728

## Beschreibung

Die vorliegende Erfindung betrifft ein Lastentransportfahrzeug, welches dazu eingerichtet ist, einen Wechselbehälter aufzunehmen und zu transportieren, umfassend eine Handhabungsvorrichtung für den Wechselbehälter, welche dazu eingerichtet ist, den Wechselbehälter auf das Lastentransportfahrzeug aufzuladen und von ihm abzusetzen, ein Hydrauliksystem, umfassend wenigstens zwei unabhängig ansteuerbare Hydraulikzylinder zum Betätigen der Handhabungsvorrichtung, und eine Steuereinheit, welche dazu eingerichtet ist, das Hydrauliksystem und/oder weitere Komponenten anhand wenigstens eines vorbestimmten Ablaufprogramms derart zu steuern, dass die Handhabungsvorrichtung zum Aufladen oder Absetzen des Wechselbehälters eine vorbestimmte Schleppkurve durchläuft.

Derartige Lastentransportfahrzeuge werden üblicherweise als Abrollkipper oder Absetzkipper bezeichnet und ihre jeweilige Handhabungsvorrichtung ist dazu eingerichtet, einen Wechselbehälter, beispielsweise zur Aufnahme von Schüttgut, auf dem Untergrund hinter dem Lastentransportfahrzeug abzusetzen oder ihn darauf abzurollen. Es versteht sich, dass demzufolge jeweils auch Paare oder Gruppen von unabhängig ansteuerbaren Hydraulikzylindern vorgesehen werden können, beispielsweise im Fall von Absetzkippern, die mit zwei symmetrisch angeordneten und betriebenen Armen beiderseits des Wechselbehälters ausgerüstet sind.

Hierbei bezeichnet der Begriff der "Schleppkurve" eine Kurve, die ein ausgewählter Bezugspunkt an der Handhabungsvorrichtung während eines Durchführens eines Ablaufprogramms durchläuft. Zweckmäßigerweise kann hierbei an einen oberen Endpunkt der Handhabungsvorrichtung gedacht werden, also beispielsweise an den Aufhängungspunkt der Ketten an einem Absetzkipper oder den Einhakpunkt an einem Abrollkipper. Bei Kenntnis der Geometrie der Handhabungsvorrichtung kann demzufolge unter Zuhilfenahme der Schleppkurve der von der Handhabungsvorrichtung während des Ablaufprogramms überstrichene Raum ermittelt werden. Ferner ist der Begriff der "weiteren Komponenten" des Lastentransportfahrzeugs so zu verstehen, dass prinzipiell sämtliche Systeme des Fahrzeugs umfasst sein können, die zum koordinierten Auf- und/oder Abladen des Wechselbehälters betrieben werden können, einschließlich des Antriebs und der Lenkung des Fahrzeugs. In bekannten gattungsgemäßen Lasttransportfahrzeugen wird die Steuerung dieser Absetz- oder Abrollvorgänge hierbei von einem Bediener vorgenommen, wobei dieser sowohl das Lastentransportfahrzeug als auch den Wechselbehälter und den Absetz- bzw. Abrollbereich in der Umgebung des Fahrzeugs im Auge behalten muss. Ferner ist insbesondere beim Einsatz in geschlossenen Räumen oder allgemein in Bereichen, in denen Hindernisse im Bereich oberhalb des Fahrzeugs vorliegen können, ferner darauf zu achten, dass die Handhabungsvorrichtung beim Durchlaufen ihrer Schleppkurve nicht mit oberhalb des Fahrzeugs befindlichen Gegenständen zusammenstoßen kann. Eine derartige Betätigung erfordert vom Bediener ein hohes Maß an Koordination und Präzision. Dennoch besteht die Gefahr, dass durch Bedienfehler das Lastentransportfahrzeug, der Wechselbehälter oder Gegenstände in der Umgebung des Fahrzeugs beschädigt werden könnten.

Ferner ist aus der EP 3 141 420 A1 ein Lastentransportfahrzeug bekannt, in welchem ein Sensor zur Messung der Neigung des Fahrzeugs gegenüber dem Erdschwerefeld vorgesehen ist. Die Druckschrift wird als der nächstliegende Stand der Technik angesehen und offenbart den Oberbegriff der Ansprüche 1 und 6.

Es ist angesichts der genannten Nachteile von bekannten gattungsgemäßen Lastentransportfahrzeugen die Aufgabe der vorliegenden Erfindung, ein derartiges Fahrzeug bereitzustellen, das einen erhöhten Automatisierungsgrad der Handhabungsvorrichtung erlaubt und somit zu einem sicheren und effizienten Betrieb des Lastentransportfahrzeugs beitragen kann.

Hierzu umfasst das erfindungsgemäße Lastentransportfahrzeug ferner wenigstens eine Sensoreinheit, die dazu eingerichtet ist, Daten an die Steuereinheit zu liefern, welche wenigstens einen momentanen Betriebsparameter des Lastentransportfahrzeugs oder einen Parameter der Umgebung des Lastentransportfahrzeugs repräsentieren, wobei die Steuereinheit ferner dazu eingerichtet ist, das wenigstens eine vorbestimmte Ablaufprogramm anhand der von der wenigstens einen Sensoreinheit gelieferten Daten während des Durchführens des Ablaufprogramms anzupassen.

Durch das erfindungsgemäße Vorsehen einer Sensoreinheit und eines Anpassens des vorbestimmten Ablaufprogramms und damit eines Überwachens bzw. Nachregelns einer vorbestimmten Schleppkurve während des Durchführens des Ablaufprogramms wird in einfacher Weise eine Regelschleife geschaffen, mit der die üblichen Betriebsabläufe von Handhabungsvorrichtungen für Wechselbehälter vereinfacht und sicherer gestaltet werden können.

In diesem Zusammenhang sei darauf hingewiesen, dass auch der Begriff des "wenigstens einen Ablaufprogramms" breit zu verstehen ist und dieses oder diese auch anhand eines zu erreichenden Ziels definiert werden kann/können, also beispielsweise einer gewünschten Abstellposition des Wechselbehälters. In diesem Fall kann es erforderlich sein, das Fahrzeug zunächst korrekt auszurichten, um ein anschließendes Absetzen des Wechselbehälters an der vorgesehenen Position zu ermöglichen. Auch dieses Ausrichten des Fahrzeugs kann durch das Vorsehen geeigneter Sensoreinheiten und ein Ansteuern entsprechender Komponenten des Fahrzeugs in geregelter Weise autonom durchgeführt werden. Hierbei ist zu beachten, dass in diesem Fall die Schleppkurve nicht lediglich durch die Betätigung der Handhabungsvorrichtung definiert wird, sondern auch die Verlagerung des Fahrzeugs an sich zu der Schleppkurve beiträgt.

Hierzu ist erfindungsgemäß die Sensoreinheit oder wenigstens eine der mehreren Sensoreinheiten dem Hydrauliksystem zugeordnet. Insbesondere ist die Sensoreinheit oder wenigstens eine der mehreren Sensoreinheiten einem der Hydraulikzylinder zugeordnet und dazu eingerichtet, dessen momentanen Hubweg zu erfassen, beispielsweise mittels elektro-mechanischer Mittel oder Ultraschall.

Da die wenigstens zwei unabhängig ansteuerbaren Hydraulikzylinder in dem vorbestimmten Ablaufprogramm koordiniert zusammenwirken und unter anderem hierdurch die vorbestimmte Schleppkurve der Handhabungsvorrichtung festgelegt wird, kann durch das Überwachen der momentanen Hubwege der Hydraulikzylinder sichergestellt werden, dass die vorbestimmte Schleppkurve der Handhabungsvorrichtung mit hoher Präzision eingehalten wird. Sollte beispielsweise einer der Hydraulikzylinder aus welchem Grund auch immer seine Hubbewegung unerwartet langsam durchführen, so kann durch Erfassen dieser verlangsamten Bewegung und entsprechendes Nachregeln der Hubbewegung wenigstens eines der anderen Hydraulikzylinder dennoch die vorbestimmte Schleppkurve eingehalten werden.

Zusätzlich könnte die Sensoreinheit oder wenigstens eine der mehreren Sensoreinheiten dazu eingerichtet sein, eine Neigung des Lastentransportfahrzeugs aus der Horizontalen zu erfassen. Derartige Sensoreinheiten können insbesondere in Umgebungen mit unebenem Untergrund von Vorteil sein, indem erfasst werden kann, dass das Lastentransportfahrzeug auf einem abschüssigen Bereich aufsteht und daher das vorbestimmte Ablaufprogramm dementsprechend anzupassen ist. Beispielsweise kann es auf einem abschüssigen Untergrund notwendig sein, einen oder mehrere der Hydraulikzylinder weiter oder weniger weit auszufahren, um ein sicheres Abstellen oder Absetzen des Wechselbehälters auf dem Untergrund zu gewährleisten.

Zusätzlich kann ferner die Sensoreinheit oder wenigstens eine der mehreren Sensoreinheiten dazu eingerichtet sein, ein Vorliegen von Objekten in der Umgebung des Lastentransportfahrzeugs zu erfassen, beispielsweise mittels Radar. Hierbei könnte beispielsweise daran gedacht werden, zu erfassen, ob der Bereich oberhalb des Lastentransportfahrzeugs frei von Objekten ist und für den Fall, dass in der Tat Objekte oberhalb des Fahrzeugs vorliegen, die Schleppkurve der Handhabungsvorrichtung in einer Weise anzupassen, dass diese zusammen mit dem Wechselbehälter während des gesamten Abladevorgangs einen ausreichenden Abstand von den Objekten in der Umgebung des Fahrzeugs einhält.

Weiter zusätzlich kann ferner die Sensoreinheit oder wenigstens eine der mehreren Sensoreinheiten dazu eingerichtet sein, eine Position und/oder Orientierung des Lastentransportfahrzeugs zu erfassen. Hierbei kann an bekannte Vorrichtungen wie GPS-Sensoren, Kompasse und Transmitter gedacht werden. Insbesondere in den oben beschriebenen Fällen, in denen das auszuführende Ablaufprogramm derart definiert ist, dass es ein Absetzen des Wechselbehälters in einem vorbestimmten Zielfeld umfasst und hierzu das Fahrzeug zunächst korrekt auszurichten ist, um das Absetzen des Wechselbehälters an der vorgesehenen Position zu ermöglichen, kann eine Erfassung der momentanen Position des Fahrzeugs unerlässlich sein. Je nach Einsatzumgebung kann hierbei eine relative Position und/oder Orientierung ausreichend sein, beispielsweise indem lediglich der Abstand zwischen Fahrzeug und Zielfeld erfasst wird, oder es kann eine absolute Position des Fahrzeugs notwendig sein, wie sie beispielsweise durch GPS erfasst werden kann.

In einer Weiterbildung kann das erfindungsgemäße Lastentransportfahrzeug ferner eine Bedienvorrichtung umfassen, welche betriebsmäßig mit der Steuereinheit gekoppelt und dazu eingerichtet ist, von einem Benutzer zur Auswahl des vorbestimmten Ablaufprogramms oder eines der mehreren vorbestimmten Ablaufprogramme bedient zu werden. Hierdurch zeigt sich ein weiterer erheblicher Vorteil der vorliegenden Erfindung, nämlich dass unter Umständen auf die aufwändigen und komplex zu bedienenden Bedienelemente für mehrere Komponenten, insbesondere eines Hydrauliksystems, verzichtet werden kann und der Benutzer lediglich auf das oder die die vorbestimmte(n) Ablaufprogramm(e) zurückgreifen kann, das oder die er beispielsweise mittels Druckknöpfen oder auch eines Touchscreens auswählen und aufrufen kann. Die derart vereinfachte Bedienung des erfindungsgemäßen Lastentransportfahrzeugs trägt weiter zum Vermeiden von Bedienfehlern und somit einer erhöhten Sicherheit im Betrieb des Fahrzeugs bei.

Weiterhin betrifft die vorliegende Erfindung ein Verfahren zum Betreiben eines Lastentransportfahrzeugs, welches dazu eingerichtet ist, einen Wechselbehälter aufzunehmen und zu transportieren, und umfassend eine Handhabungsvorrichtung für den Wechselbehälter, welche dazu eingerichtet ist, den Wechselbehälter auf das Lastentransportfahrzeug aufzuladen und von ihm abzusetzen, ein Hydrauliksystem, umfassend wenigstens zwei unabhängig ansteuerbare Hydraulikzylinder zum Betätigen der Handhabungsvorrichtung, und eine Steuereinheit, welche dazu eingerichtet ist, das Hydrauliksystem zu steuern, wobei das erfindungsgemäße Verfahren die folgenden Schritte umfasst:
- ein Ablegen von wenigstens einem vordefinierten Ablaufprogramm in einem der Steuereinheit zugeordneten Speicher,
- ein Betreiben des Hydrauliksystems und/oder weiterer Komponenten des Lastentransportfahrzeugs gemäß dem vorbestimmten Ablaufprogramm oder einem der mehreren vorbestimmten Ablaufprogramme, so dass die Handhabungsvorrichtung eine vorbestimmte Schleppkurve durchläuft,
- ein Erfassen wenigstens eines momentanen Betriebsparameters des Lastentransportfahrzeugs und/oder eines Parameters der Umgebung des Lastentransportfahrzeugs mittels wenigstens einer Sensoreinheit, und
- ein Anpassen des Ablaufprogramms anhand der von der wenigstens einen Sensoreinheit erfassten Daten während des Durchführens des Ablaufprogramms
wobei das Erfassen des wenigstens einen momentanen Betriebszustands oder Parameters der Umgebung des Lastentransportfahrzeugs ein Erfassen eines momentanen Hubwegs von wenigstens einem der Hydraulikzylinder umfasst.

In einer Weiterbildung kann das wenigstens eine Ablaufprogramm derart vordefiniert werden, dass die Schleppkurve möglichst nah am Fahrzeugkörper des Lastentransportfahrzeugs verläuft, beispielsweise indem eine maximale Höhe der Handhabungsvorrichtung während des Durchlaufens der Schleppkurve minimiert wird. Das Vorsehen derartiger nah am Lastentransportfahrzeug verlaufener Schleppkurven war in bisherigen Lastentransportfahrzeugen mit einer erhöhten Gefahr einer Fehlbedienung bzw. Fehlfunktion der Handhabungsvorrichtung verbunden, da diese aus Sicherheitsgründen stets für einen gewissen Sicherheitsabstand zwischen dem Fahrzeugkörper des Lastentransportfahrzeugs und dem Wechselbehälter sorgen musste. Indem nun erfindungsgemäß eine sensorische Überwachung des Ablaufprogramms durchgeführt wird, kann ein einzuhaltender Sicherheitsabstand verringert werden, wodurch der gesamte von der Handhabungsvorrichtung überstrichene Raum verringert wird, indem ihre Schleppkurve näher am Fahrzeug verläuft.

Insbesondere kann das Erfassen eines Betriebszustands oder Parameters der Umgebung des Lastentransportfahrzeugs ferner ein Erfassen von wenigstens einem der folgenden umfassen:
eine Neigung des Lastentransportfahrzeugs aus der Horizontalen, eine Position und/oder Orientierung des Lastentransportfahrzeugs und
ein Vorliegen von Objekten in der Umgebung des Lastentransportfahrzeugs.
Weiterhin kann das erfindungsgemäße Verfahren ein Überwachen einer vorbestimmten Endstellung einer während des Ablaufprogramms betätigten Komponente sowie gegebenenfalls eine Anpassung des Ablaufprogramms auf Grundlage dieser Überwachung umfassen. Dieses Erfassen einer

Endstellung durch die erfindungsgemäß vorgesehene wenigstens eine Sensoreinheit trägt weiter zum sicheren Betrieb von Lastentransportfahrzeugen bei, beispielsweise indem sichergestellt werden kann, dass sich die Handhabungsvorrichtung am Ende eines Abladevorgangs in einer korrekten Position befindet.

Weiterhin kann das erfindungsgemäße Verfahren ein Auswählen des Ablaufprogramms oder eines der mehreren Ablaufprogramme durch einen Benutzer mittels einer Bedienvorrichtung umfassen, welche betriebsmäßig mit der Steuereinheit gekoppelt ist.

Zuletzt kann vorgesehen werden, dass eine Mehrzahl von Ablaufprogrammen in dem Speicher abgelegt werden, welche jeweils einer Bauart von Wechselbehälter zugeordnet sind. Auf diese Weise können für verschiedene von dem Fahrzeug transportierbare Wechselbehälter jeweils individuelle Schleppkurven durchfahren werden, wodurch die Präzision und Zuverlässigkeit des erfindungsgemäßen Verfahrens weiter erhöht wird.

Weitere Merkmale und Vorteile der vorliegenden Erfindung werden aus der nachfolgenden Beschreibung einer Ausführungsform anhand der beiliegenden Figuren deutlich, die im Einzelnen zeigen:
- Figur 1: eine schematische Ansicht eines erfindungsgemäßen Lastentransportfahrzeugs; und
- Figur 2: ein schematisches Schaltbild von in dem Lastentransportfahrzeug aus Figur 1 vorgesehenen hydraulischen und elektronischen Komponenten.

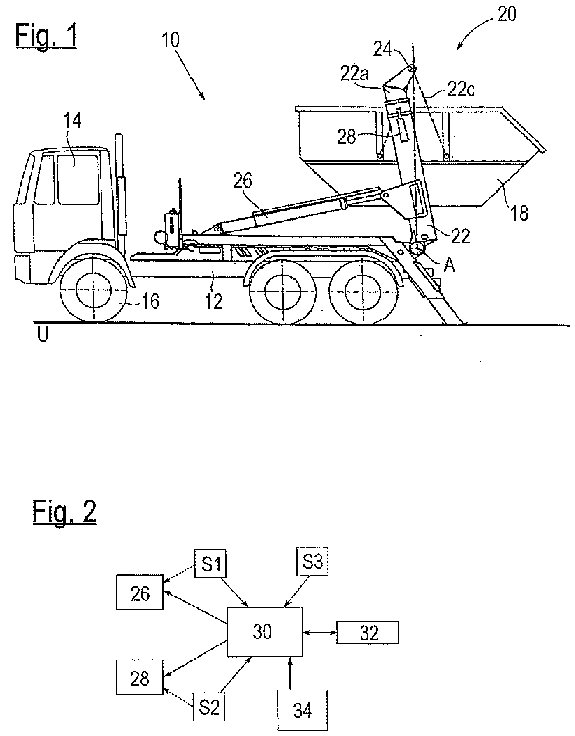

In Figur 1 ist hierbei ein erfindungsgemäßes Lastentransportfahrzeugs gezeigt, das in einer Bauweise als Absetzkipper ausgebildet und ganz allgemein mit dem Bezugszeichen 10 bezeichnet ist. Das Lastentransportfahrzeug 10 umfasst bekannte Elemente wie einen Fahrzeugkörper 12, eine Fahrerkabine 14 und Räder 16, mit denen es auf einem Untergrund U aufsteht. Ferner umfasst es einen Wechselbehälter 18, der im gezeigten Beispiel zur Aufnahme von Schüttgut vorgesehen ist.

Der Wechselbehälter 18 ist durch eine mit dem Bezugszeichen 20 bezeichnete Handhabungsvorrichtung auf das Fahrzeug aufnehmbar und von diesem absetzbar, die einen um eine Achse A schwenkbaren Arm 22 umfasst, der wiederum ein ausfahrbares Oberteil 22a umfasst. An dem der Schwenkachse A abgewandten Ende des ausfahrbaren Teils 22a ist ferner ein Aufhängungspunkt 24 vorgesehen, an dem der Wechselbehälter 18 von der Handhabungsvorrichtung 20 mittels Ketten 22c gehalten wird. Es versteht sich, dass der in der Seitenansicht aus Figur 1 sichtbare Arm 22 lediglich einer aus einem Paar von Armen ist, die sich beiderseits des Wechselbehälters 18 in symmetrischer Weise erstrecken und auch gemeinsam betätigt und koordiniert bewegt werden.

Die Betätigung der Handhabungsvorrichtung 20 erfolgt über zwei Paare von Hydraulikzylindern, von denen in der Seitenansicht aus Figur 1 jedoch ebenfalls jeweils nur ein Hydraulikzylinder sichtbar ist. Aus den sichtbaren Hydraulikzylindern ist der erste Hydraulikzylinder 26 sowohl an dem Arm 22 als auch dem Fahrzeugkörper 12 angelenkt , der die Schwenkbewegung des Arms 22 um die Achse A gegenüber dem Fahrzeugkörper 12 antreibt. Ferner ist dem Arm 22 ein zweiter Hydraulikzylinder 28 zugeordnet, der die Ausfahrbewegung des ausfahrbaren Teils 22a des Arms 22 antreibt.

Indem die beiden Hydraulikzylinder 26 und 28 in koordinierter Weise betrieben werden, kann der Wechselbehälter 18 zwischen einer Position, in der er sich auf dem Fahrzeug 10 befindet, und einer Position bewegt werden, in der er hinter dem Fahrzeug 10 auf dem Untergrund aufsteht. Während der Überführung des Wechselbehälters 18 zwischen diesen beiden Positionen durchläuft die Handhabungsvorrichtung 20 eine vorbestimmte Schleppkurve, wobei insbesondere die Bahnkurve des Aufhängungspunkts 24 von Interesse ist, da dieser Abschnitt der Handhabungsvorrichtung 20 stets den größten Abstand vom Fahrzeugkörper 12 aufweist. Des Weiteren definiert die momentane Position des Aufhängungspunkts 24 auch die relative Positionierung zwischen dem Wechselbehälter 18 und dem Fahrzeugkörper 12, da in aufgehängtem Zustand der Wechselbehälter 18 fest mit dem Aufhängungspunkt verbunden ist und sich somit parallel zu diesem bewegt.

Für den koordinierten Betrieb der beiden Hydraulikzylinder 26 und 28 ist die in Figur 2 gezeigte Steuereinheit 30 vorgesehen, die mit den beiden Hydraulikzylindern 26 und 28 betriebsmäßig gekoppelt ist und neben einem Prozessor und einem Speicher 32 zum Ablegen von Ablaufprogrammen und einem Betriebssystem noch weitere hydraulische Komponenten, wie Proportionalventile und Ähnliches, umfasst.

Ferner sind Sensoreinheiten S1, S2 und S3 vorgesehen, wobei die Sensoreinheiten S1 und S2 dem ersten bzw. zweiten Hydraulikzylinder 26, 28 zugeordnet sind und die jeweilige momentane Hubposition der Kolben der beiden Hydraulikzylinder 26, 28 erfassen, und damit den momentanen Ausfahrzustand des jeweiligen Zylinders und indirekt die Relativposition der beiden dem jeweiligen Zylinder zugeordneten Komponenten.

Der Sensor S3 ist ferner ein optischer oder Radar-Sensor, der die Umgebung des Lastentransportfahrzeugs 10 erfasst und insbesondere den Raum oberhalb des Fahrzeugs, durch den die vorgesehene Schleppkurve der Handhabungsvorrichtung 20 verläuft.

Indem durch die betriebsmäßige Koppelung der Sensoreinheiten S1 - S3 mit der Steuereinheit 30 eine Regelschleife geschaffen wird, kann das jeweils momentan ausgeführte Ablaufprogramm während seines Betriebs in Echtzeit angepasst werden, so dass einerseits sichergestellt werden kann, dass die beiden Hydraulikzylinder 26 und 28 stets in einem geeigneten Hubverhältnis zueinander stehen, und andererseits kann bei einem Erfassen eines Vorliegens eines Hindernisses im Bereich der vorgesehenen Schleppkurve durch den Sensor S3 das Ablaufprogramm derart angepasst werden, dass keine Kollision der Handhabungsvorrichtung 20 oder des Wechselbehälters 18 mit einem Gegenstand auftreten wird.

Zuletzt ist die Steuereinheit 30 mit einer Bedienvorrichtung 34 gekoppelt, mittels derer ein Benutzer ein gewünschtes Ablaufprogramm auswählen und das Lastentransportfahrzeug zum Durchführen dieses Ablaufprogramms anweisen kann.

## Patentansprüche

1. Lastentransportfahrzeug, welches dazu eingerichtet ist, einen Wechselbehälter (18) aufzunehmen und zu transportieren, umfassend:
- eine Handhabungsvorrichtung (20) für den Wechselbehälter (18), welche dazu eingerichtet ist, den Wechselbehälter (18) auf das Lastentransportfahrzeug aufzuladen und von ihm abzusetzen;
- ein Hydrauliksystem, umfassend wenigstens zwei unabhängig ansteuerbare Hydraulikzylinder (26, 28) zum Betätigen der Handhabungsvorrichtung (20);
- eine Steuereinheit (30), welche dazu eingerichtet ist, das Hydrauliksystem und/oder weitere Komponenten des Lastentransportfahrzeugs anhand wenigstens eines vorbestimmten Ablaufprogramms derart zu steuern, dass die Handhabungsvorrichtung (20) zum Aufladen oder Absetzen des Wechselbehälters (18) eine vorbestimmte Schleppkurve durchläuft;
**dadurch gekennzeichnet, dass** es ferner wenigstens eine Sensoreinheit (S1, S2, S3) umfasst, welche dazu eingerichtet ist, Daten an die Steuereinheit (30) zu liefern, welche wenigstens einen momentanen Betriebsparameter des Lastentransportfahrzeugs oder einen Parameter der Umgebung des Lastentransportfahrzeugs repräsentieren, wobei die Steuereinheit (30) ferner dazu eingerichtet ist, das wenigstens eine vorbestimmte Ablaufprogramm anhand der von der wenigstens einen Sensoreinheit (S1, S2, S3) gelieferten Daten während des Durchführens des Ablaufprogramms anzupassen, wobei die Sensoreinheit (S1, S2) oder wenigstens eine der mehreren Sensoreinheiten (S1, S2) dem Hydrauliksystem zugeordnet ist,
**dadurch gekennzeichnet, dass** wenigstens die Sensoreinheit (S1, S2) oder die wenigstens eine der mehreren Sensoreinheiten (S1, S2) einem der Hydraulikzylinder (26, 28) zugeordnet und dazu eingerichtet ist, dessen momentanen Hubweg zu erfassen, beispielsweise mittels elektro-mechanischer Mittel oder Ultraschall.

2. Lastentransportfahrzeug nach Anspruch 1,
**dadurch gekennzeichnet, dass** wenigstens die eine Sensoreinheit oder wenigstens eine der mehreren Sensoreinheiten dazu eingerichtet ist, eine Neigung des Lastentransportfahrzeugs aus der Horizontalen zu erfassen.

3. Lastentransportfahrzeug nach einem der vorhergehenden Ansprüche,
**dadurch gekennzeichnet, dass** wenigstens die Sensoreinheit (S3) oder wenigstens eine der mehreren Sensoreinheiten (S3) dazu eingerichtet ist, ein Vorliegen von Objekten in der Umgebung des Lastentransportfahrzeugs zu erfassen, beispielsweise mittels Radar.

4. Lastentransportfahrzeug nach einem der vorhergehenden Ansprüche,
**dadurch gekennzeichnet, dass** die Sensoreinheit oder wenigstens eine der mehreren Sensoreinheiten dazu eingerichtet ist, eine Position und/oder Orientierung des Lastentransportfahrzeugs zu erfassen.

5. Lastentransportfahrzeug nach einem der vorhergehenden Ansprüche,
**dadurch gekennzeichnet, dass** es ferner eine Bedienvorrichtung (34) umfasst, welche betriebsmäßig mit der Steuereinheit (30) gekoppelt und dazu eingerichtet ist, von einem Benutzer zur Auswahl des vorbestimmten Ablaufprogramms oder eines der mehreren vorbestimmten Ablaufprogramme bedient zu werden.

6. Verfahren zum Betreiben eines Lastentransportfahrzeugs (10), welches dazu eingerichtet ist, einen Wechselbehälter (18) aufzunehmen und zu transportieren, und umfassend:
- eine Handhabungsvorrichtung (20) für den Wechselbehälter (18), welche dazu eingerichtet ist, den Wechselbehälter (18) auf das Lastentransportfahrzeug (10) aufzuladen und von ihm abzusetzen;
- ein Hydrauliksystem, umfassend wenigstens zwei unabhängig ansteuerbare Hydraulikzylinder (26, 28) zum Betätigen der Handhabungsvorrichtung (20); und
- eine Steuereinheit (30), welche dazu eingerichtet ist, das Hydrauliksystem zu steuern;
das Verfahren **gekennzeichnet durch** die Schritte:
- ein Ablegen von wenigstens einem vordefinierten Ablaufprogramm in einem der Steuereinheit (30) zugeordneten Speicher (32);
- ein Betreiben des Hydrauliksystems und/oder weiterer Komponenten des Lastentransportfahrzeugs (10) gemäß dem vorbestimmten Ablaufprogramm oder einem der mehreren vorbestimmten Ablaufprogramme, so dass die Handhabungsvorrichtung (20) eine vorbestimmte Schleppkurve durchläuft;
- ein Erfassen wenigstens eines momentanen Betriebsparameters des Lastentransportfahrzeugs (10) und/oder eines Parameters der Umgebung des Lastentransportfahrzeugs mittels wenigstens einer Sensoreinheit (S1, S2, S3); und
- ein Anpassen des Ablaufprogramms anhand der von der wenigstens einen Sensoreinheit (S1, S2, S3) erfassten Daten während des Durchführens des Ablaufprogramms,
**dadurch gekennzeichnet, dass** das Erfassen des wenigstens einen momentanen Betriebszustands oder Parameters der Umgebung des Lastentransportfahrzeugs ein Erfassen eines momentanen Hubwegs von wenigstens einem der Hydraulikzylinder (26, 28) umfasst.

7. Verfahren nach Anspruch 6,
**dadurch gekennzeichnet, dass** das wenigstens eine Ablaufprogramm derart vordefiniert wird, dass die Schleppkurve möglichst nah am Fahrzeugkörper (12) des Lastentransportfahrzeugs (10) verläuft, beispielsweise indem eine maximale Höhe der Handhabungsvorrichtung (20) während des Durchlaufens der Schleppkurve minimiert wird.

8. Verfahren nach Anspruch 6 oder 7,
**dadurch gekennzeichnet, dass** das Erfassen der Betriebszustände oder Parameter der Umgebung des Lastentransportfahrzeugs ferner ein Erfassen von wenigstens einem der folgenden umfasst:
- eine Neigung des Lastentransportfahrzeugs (10) aus der Horizontalen;
- eine Position und/oder Orientierung des Lastentransportfahrzeugs (10); und
- ein Vorliegen von Objekten in der Umgebung des Lastentransportfahrzeugs (10).

9. Verfahren nach einem der Ansprüche 6 bis 8,
**dadurch gekennzeichnet, dass** es ferner ein Überwachen einer vorbestimmten Endstellung einer während des Ablaufprogramms betätigten Komponente sowie gegebenenfalls einer Anpassung des Ablaufprogramms auf Grundlage dieser Überwachung umfasst.

10. Verfahren nach einem der Ansprüche 6 bis 9,
**dadurch gekennzeichnet, dass** es ferner ein Auswählen eines der Ablaufprogramme durch einen Benutzer mittels einer Bedienvorrichtung (34) umfasst, welche betriebsmäßig mit der Steuereinheit (30) gekoppelt ist.

11. Verfahren nach einem der Ansprüche 6 bis 10,
**dadurch gekennzeichnet, dass** eine Mehrzahl von Ablaufprogrammen in dem Speicher (32) abgelegt werden, welche jeweils einer Bauart von Wechselbehälter (18) zugeordnet sind.

## Claims

1. Load transport vehicle which is designed to receive and transport an interchangeable container (18), comprising:
- a handling device (20) for the interchangeable container (18), which is designed to load the interchangeable container (18) onto the load transport vehicle and to remove said interchangeable container from the load transport vehicle;
- a hydraulic system comprising at least two independently controllable hydraulic cylinders (26, 28) for actuating the handling device (20);
- a control unit (30) which is designed to control the hydraulic system and/or further components of the load transport vehicle on the basis of at least one predetermined sequence program such that the handling device (20) passes through a predetermined tractrix in order to load or remove the interchangeable container (18);
**characterised in that** said load transport vehicle further comprises at least one sensor unit (S1, S2, S3) which is designed to supply data to the control unit (30) which data represent at least one current operating parameter of the load transport vehicle or a parameter of the surroundings of the load transport vehicle, the control unit (30) being further designed to adapt the at least one predetermined sequence program on the basis of the data supplied by the at least one sensor unit (S1, S2, S3) while the sequence program is being carried out, the sensor unit (S1, S2) or at least one of the plurality of sensor units (S1, S2) being assigned to the hydraulic system, **characterised in that** at least the sensor unit (S1, S2) or the at least one of the plurality of sensor units (S1, S2) is assigned to one of the hydraulic cylinders (26, 28) and is designed to detect the current stroke path of said hydraulic cylinder, for example by means of electromechanical means or ultrasound.

2. Load transport vehicle according to claim 1, **characterised in that** at least the one sensor unit or at least one of the plurality of sensor units is designed to detect an inclination of the load transport vehicle from the horizontal.

3. Load transport vehicle according to either of the preceding claims, **characterised in that** at least the sensor unit (S3) or at least one of the plurality of sensor units (S3) is designed to detect a presence of objects in the surroundings of the load transport vehicle, for example by means of radar.

4. Load transport vehicle according to any of the preceding claims, **characterised in that** the sensor unit or at least one of the plurality of sensor units is designed to detect a position and/or orientation of the load transport vehicle.

5. Load transport vehicle according to any of the preceding claims, **characterised in that** said load transport vehicle further comprises an operating device (34) which is operatively coupled to the control unit (30) and is designed to be operated by a user in order to select the predetermined sequence program or one of the plurality of predetermined sequence programs.

6. Method for operating a load transport vehicle (10) which is designed to receive and transport an interchangeable container (18) and comprises:
- a handling device (20) for the interchangeable container (18), which is designed to load the interchangeable container (18) onto the load transport vehicle (10) and to remove said interchangeable container from the load transport vehicle;
- a hydraulic system comprising at least two independently controllable hydraulic cylinders (26, 28) for actuating the handling device (20); and
- a control unit (30) which is designed to control the hydraulic system;
the method **characterised by** the steps of:
- storing at least one predefined sequence program in a memory (32) assigned to the control unit (30);
- operating the hydraulic system and/or further components of the load transport vehicle (10) according to the predetermined sequence program or one of the plurality of predetermined sequence programs, such that the handling device (20) passes through a predetermined tractrix;
- detecting at least one current operating parameter of the load transport vehicle (10) and/or a parameter of the surroundings of the load transport vehicle by means of at least one sensor unit (S1, S2, S3); and
- adapting the sequence program on the basis of the data detected by the at least one sensor unit (S1, S2, S3) while the sequence program is being carried out,
**characterised in that** detecting the at least one current operating state or parameter of the surroundings of the load transport vehicle comprises detecting a current stroke path of at least one of the hydraulic cylinders (26, 28).

7. Method according to claim 6, **characterised in that** the at least one sequence program is predefined such that the tractrix extends as close as possible to the vehicle body (12) of the load transport vehicle (10), for example by a maximum height of the handling device (20) being minimised during passage through the tractrix.

8. Method according to either claim 6 or claim 7, **characterised in that** detecting the operating states or parameters of the surroundings of the load transport vehicle further comprises detecting at least one of the following:
- an inclination of the load transport vehicle (10) from the horizontal;
- a position and/or orientation of the load transport vehicle (10); and
- a presence of objects in the surroundings of the load transport vehicle (10).

9. Method according to any of claims 6 to 8, **characterised in that** it further comprises monitoring a predetermined end position of a component operated during the sequence program and, if necessary, adapting the sequence program on the basis of said monitoring.

10. Method according to any of claims 6 to 9, **characterised in that** it further comprises a user selecting one of the sequence programs by means of an operating device (34) which is operatively coupled to the control unit (30).

11. Method according to any of claims 6 to 10, **characterised in that** a plurality of sequence programs are stored in the memory (32), which sequence programs are each assigned to a type of interchangeable container (18).

## Revendications

1. Véhicule de transport de charges adapté pour recevoir et transporter un conteneur interchangeable (18), comprenant :
- un dispositif de manutention (20) pour le conteneur interchangeable (18), qui est adapté pour charger le conteneur interchangeable (18) sur le véhicule de transport de charge et le décharger de celui-ci;
- un système hydraulique comprenant au moins deux cylindres hydrauliques (26, 28) pouvant être commandés indépendamment l'un de l'autre pour actionner le dispositif de manutention (20) ;
- une unité de commande (30), qui est adaptée pour commander le système hydraulique et/ou d'autres composants du véhicule de transport de charges sur la base d'au moins un programme séquentiel prédéterminé, de telle sorte que le dispositif de manutention (20) parcourt une courbe de trajectoire prédéterminée pour le chargement ou le déchargement du conteneur interchangeable (18) ;
**caractérisé en ce qu'**il comprend en outre au moins une unité de capteur (S1, S2, S3) adaptée pour fournir des données à ladite unité de commande (30) représentant au moins un paramètre de fonctionnement instantané dudit véhicule de transport de charges ou un paramètre de l'environnement dudit véhicule de transport de charges, dans lequel ladite unité de commande (30) est en outre adaptée pour commander ledit au moins un programme séquentiel prédéterminée sur la base des données fournies par ladite au moins une unité de capteur (S1, S2, S3) pendant l'exécution du programme séquentiel, dans lequel l'unité de capteur (S1, S2) ou au moins l'une des plusieurs unités de capteur (S1, S2) est associée au système hydraulique, **caractérisé en ce qu'**au moins l'unité de capteur (S1, S2) ou au moins l'une des plusieurs unités de capteur (S1, S2) est associée à l'un des cylindres hydrauliques (26, 28) et est configurée pour détecter sa course instantanée, par exemple par des moyens électromécaniques ou des ultrasons.

2. Véhicule de transport de charges selon la revendication 1,
**caractérisé en ce qu'**au moins ladite une unité de capteur ou au moins une des plusieurs unités de capteur est adaptée pour détecter une inclinaison du véhicule de transport de charges par rapport à l'horizontale.

3. Véhicule de transport de charges selon l'une des revendications précédentes,
**caractérisé en ce qu'**au moins ladite unité de capteur (S3) ou au moins une des plusieurs unités de capteur (S3) est adaptée pour détecter la présence d'objets dans l'environnement du véhicule de transport de charges, par exemple au moyen d'un radar.

4. Véhicule de transport de charges selon l'une des revendications précédentes,
**caractérisé en ce que** l'unité de capteur ou au moins une des plusieurs unités de capteur est adaptée pour détecter une position et/ou une orientation du véhicule de transport de charges.

5. Véhicule de transport de charges selon l'une des revendications précédentes,
**caractérisé en ce qu'**il comprend en outre un dispositif de configuration (34) couplé de manière opérationnelle à l'unité de commande (30) et adapté pour être actionné par un utilisateur pour sélectionner le programme séquentiel prédéterminé ou l'un des plusieurs programmes séquentiels prédéterminés.

6. Procédé pour opérer un véhicule de transport de charges (10) adapté pour recevoir et transporter un conteneur interchangeable (18), et comprenant :
- un dispositif de manutention (20) pour le conteneur interchangeable (18), qui est adapté pour charger et décharger le conteneur interchangeable (18) sur le véhicule de transport de charge (10) et le décharger de celui-ci;
- un système hydraulique comprenant au moins deux cylindres hydrauliques (26, 28) pouvant être commandés indépendamment pour actionner le dispositif de manutention (20) ; et
- une unité de commande (30) adaptée pour commander le système hydraulique ;
le procédé étant **caractérisé par** les étapes suivantes :
- mémorisation d'au moins un programme séquentiel prédéfini dans une mémoire (32) associée à l'unité de commande (30) ;
- commande du système hydraulique et/ou d'autres composants du véhicule de transport de charges (10) selon le programme séquentiel prédéterminé ou l'un des plusieurs programmes séquentiels prédéterminés de telle sorte que le dispositif de manutention (20) parcourt une courbe de trajectoire prédéterminé ;
- détection d'au moins un paramètre de fonctionnement instantané du véhicule de transport de charges (10) et/ou d'un paramètre de l'environnement du véhicule de transport de charges au moyen d'au moins une unité de capteur (S1, S2, S3) ; et
- adaptation du programme séquentiel en utilisant les données détectées par ladite au moins une unité de capteur (S1, S2, S3) pendant l'exécution du programme séquentiel,
**caractérisé en ce que** la détection dudit au moins un état de fonctionnement instantané ou du paramètre de l'environnement du véhicule de transport de charge comprend la détection d'une trajectoire de course instantanée d'au moins un des cylindres hydrauliques (26, 28).

7. Procédé selon la revendication 6,
**caractérisé en ce que** ledit au moins un programme séquentiel est prédéfini de telle sorte que la courbe de trajectoire se déroule le plus près possible de la carrosserie (12) du véhicule de transport de charges (10), par exemple en minimisant une hauteur maximale du dispositif de manutention (20) pendant le déroulement de la courbe de trajectoire.

8. Procédé selon la revendication 6 ou 7,
**caractérisé en ce que** la détection des états de fonctionnement ou paramètres de l'environnement du véhicule de transport de charge comprend en outre la détection d'au moins un des éléments suivants :
- une inclinaison du véhicule de transport de charge (10) par rapport à l'horizontale ;
- une position et/ou une orientation du véhicule de transport de charge (10) ; et
- une présence d'objets dans l'environnement du véhicule de transport de charge (10).

9. Procédé selon l'une quelconque des revendications 6 à 8,
**caractérisée en ce qu'**elle comprend en outre la surveillance d'une position finale prédéterminée d'un composant actionné pendant le programme séquentiel et, si nécessaire, l'adaptation du programme séquentiel sur la base de cette surveillance.

10. Procédé selon l'une des revendications 6 à 9,
**caractérisée en ce qu'**elle comprend en outre une sélection de l'un des programmes séquentiels par un utilisateur au moyen d'un dispositif de configuration (34) couplé de manière opérationnelle à l'unité de commande (30).

11. Procédé selon l'une des revendications 6 à 10,
**caractérisée en ce que** plusieurs programmes séquentiels sont mémorisés dans la mémoire (32), dont chacun est associé à un type de conteneur interchangeable (18).
